Europäisches Patentamt

European Patent Office

Office européen des brevets

(19)

(11) **EP 0 527 059 B1**

(12) **EUROPEAN PATENT SPECIFICATION**

(45) Date of publication and mention
of the grant of the patent:
**07.01.1998 Bulletin 1998/02**

(51) Int Cl.6: **G01N 1/00**, G01N 35/10,
B01L 3/02

(21) Application number: **92307246.6**

(22) Date of filing: **07.08.1992**

(54) **Method for agitating and sampling a liquid specimen**

Verfahren zum Rühren und zur Probenentnahme einer flüssigen Probe

Procédé pour agiter et échantilloner un échantillon liquide

(84) Designated Contracting States:
**DE FR GB IT NL**

(30) Priority: **07.08.1991 JP 222129/91**
**05.02.1992 JP 56382/92**

(43) Date of publication of application:
**10.02.1993 Bulletin 1993/06**

(73) Proprietor: **TOA MEDICAL ELECTRONICS CO.,
LTD.
Chuoku, Kobe (JP)**

(72) Inventors:
• **Ueno, Hiroyuki
  Akashishi, Hyogoken (JP)**
• **Ohyama, Masaki
  Kakogun, Hyogoken (JP)**

(74) Representative: **Price, Paul Anthony King
  D. Young & Co.,
  21 New Fetter Lane
  London EC4A 1DA (GB)**

(56) References cited:
**EP-A- 0 210 014**          **EP-A- 0 411 620**
**WO-A-91/18273**          **DE-C- 3 927 718**
**DE-U- 9 100 548**

**Description**

The invention relates to a method for agitating and sampling a liquid specimen such as urine. The invention is, for example, useful in an automatic analyzer, in order to agitate and sample efficiently, without creating bubbles, a large volume of specimen contained in a slender container.

When analyzing a specific solid component of a liquid specimen in an analyzer, the specimen must first be agitated to uniformly disperse the component, before the specimen is sampled. Otherwise, the intended component may remain at the bottom, and correct sampling is not effected.

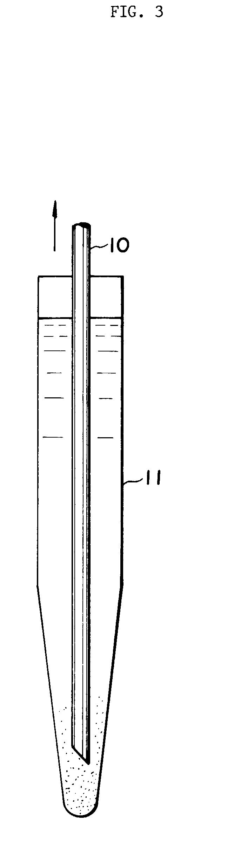

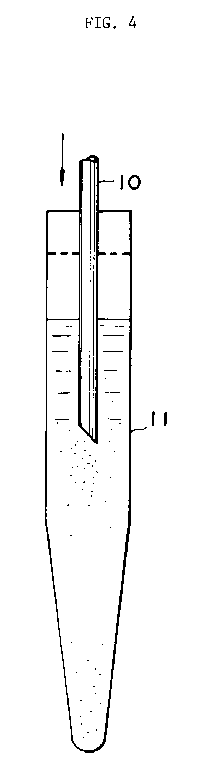

Known methods of agitation include (1) inverting the container and (2) stirring the specimen in the container. In the case of method (1), the container must be tightly closed, and it cannot be applied to a container without a cap. In the case of method (2), it is not possible to agitate sufficiently a specimen in a slender container. Especially in the case of a container for urinary sediment, the bottom is narrow (see Figs. 3, 4), and it is difficult to uniformly disperse the components that have settled on the bottom.

Japanese Laid-open Patent Sho. 63-66466 discloses apparatus for sucking a mixed liquid from a reaction container and into a dispensing nozzle, and then discharging the liquid back into the reaction container in order to agitate it. In one embodiment, a reagent is discharged from a nozzle into a reaction container containing a specimen and mixes with the specimen. The nozzle front end is lowered to the bottom of the reaction container, and almost the whole volume of the mixed solution is sucked into the nozzle, and the whole volume is then discharged from the nozzle.

Apparatus is known for detecting bubbles when sucking a specimen. Japanese Laid-open Patent Hei. 2-61557 discloses apparatus comprising spaced apart electrodes in the liquid flow for discriminating between conductive liquid and nonconductive liquid, by applying an AC voltage between the electrodes and detecting the electrical resistance.

In Sho. 63-66466, aspirating from the bottom and discharging at the bottom does not create sufficient agitation. To compensate for this shortcoming, nearly the whole volume of the liquid is sucked up and discharged. If the liquid volume is small, it may be possible to suck and discharge the whole volume, but this is difficult if the liquid volume is large. To construct the apparatus of this publication, suction means with a large capacity and a large suction force is required, which also means that the aspiration and discharge steps are of long duration. Furthermore, the specimen (for example, urine containing blood corpuscles, epithethial cells, casts and other solid components) may be damaged because violent agitation may damage fragile components such as casts.

In either Sho. 63-66466 or Hei. 2-61557, nothing is mentioned about agitating the specimen by changing the position of a pipette when aspirating and discharging the specimen.

EP-A-0411620 discloses agitating a specimen by using a pipette to perform suction and discharge of the specimen whilst moving the pipette to keep its tip a constant distance below the surface of the specimen.

Fig. 5 of EP-A-0210014 discloses mixing red blood cells into a saline solution by discharging the blood cells from a pippette whilst moving the pipette upwards from the bottom of the container. The solution is then sampled for analysis.

According to the present invention, there is provided a method of agitating and sampling a liquid specimen, comprising sucking specimen from a specimen container with a pipette, discharging the sucked specimen so as to agitate the specimen, and sampling the specimen with the pipette, wherein specimen suction and specimen discharge are carried out while changing the vertical position of the pipette in the specimen container, characterized in that the pipette is raised relative to the specimen container during specimen suction and is lowered relative to the specimen container during specimen discharge.

The invention will now be described by way of non-limiting embodiments with reference to the accompanying drawings, in which:-

Fig. 1 is a schematic diagram of a first embodiment of apparatus for agitating and sampling a liquid specimen by using the method of the invention;
Fig. 2 is a time chart for explaining an example of the method of the invention;
Fig. 3 is an explanatory diagram showing the position of the pipette in the specimen container when sucking liquid specimen;
Fig. 4 is an explanatory diagram showing the position of the pipette in the specimen container when discharging liquid specimen;
Fig. 5 is an explanatory diagram showing a second embodiment of apparatus for use with the method of the invention;
Fig. 6 is a block diagram of the apparatus of Fig. 5;
Fig. 7 is a schematic diagram of a third embodiment of apparatus for agitating and sampling a liquid specimen by using the method of the invention;
Fig. 8 is a partially cutaway sectional view of a suction pipette of the apparatus of Fig. 7;
Fig. 9 is a circuit diagram showing an example of a detecting circuit of the apparatus of Fig. 7;
Fig. 10 is a waveform diagram of a signal V1 appearing at a test point TP1 of the apparatus of Fig. 7;

Fig. 11 is a waveform diagram of a signal V2 appearing at a test point TP2 of the apparatus of Fig. 7; and
Fig. 12 is an explanatory diagram showing the motion of the specimen in the specimen suction line L of the apparatus of Fig. 7.

Embodiment 1

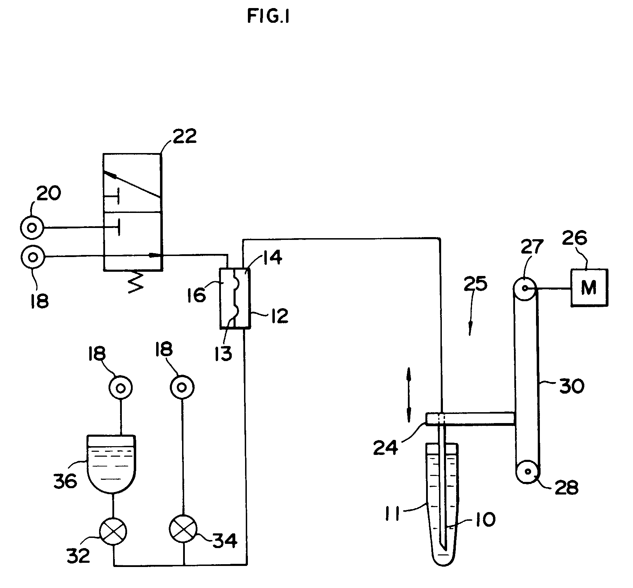

Fig. 1 is a schematic diagram of an apparatus for agitating and sucking liquid specimen by using the method of the invention. Numeral 10 is a pipette for sucking liquid specimen, and suction means 12 is connected to this pipette 10. As the suction means 12, for example, a diaphragm type pump (hereinafter called diaphragm pump 12) is used. One compartment 14 of the diaphragm pump 12 partitioned by a diaphragm 13 is connected to the pipette 10, and the other compartment 16, to a valve 22 for changing over a positive pressure (higher than atmospheric pressure) source 18 and a negative pressure (lower than atmospheric pressure) source 20.

The pipette 10 is moved up and down by the driving means 25. This driving means 25 comprises, for example, an arm 24 nearly in the horizontal direction for holding the pipette 10, an endless belt 30 nearly in the vertical direction mounting this arm 24, pulleys 27, 28 disposed at the upper end and lower end of the endless belt 30, and a driving source 26 for driving the pulley 27 such as a stepping motor.

The endless belt 30 is threaded between the pulleys 27, 28, and when the pulley rotates normally or reversely, the arm 24 and pipette 10 move up and down in the specimen container 11, such as urinary sediment spitbox.

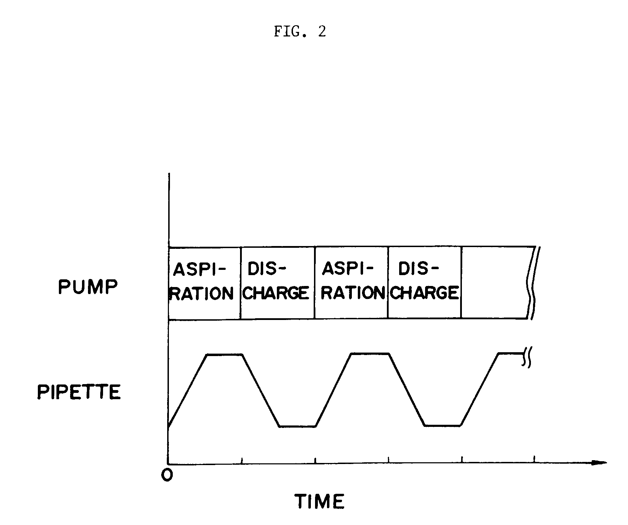

Fig. 2 is an example of timing chart for explaining an example of the method of the invention. Fig. 3 shows the state of suction of specimen, and Fig. 4 shows the state of discharge of specimen. The specimen container 11 is, for example, a urinary sediment spitbox for 10 ml.

Referring to Fig. 2, the agitation and sampling operation is described below.

(1) The driving source 26 operates to lower the pipette 10 to the state in Fig. 3.
(2) The valve 22 operates, and the other compartment 16 of the diaphragm pump 12 communicates with the negative pressure source 20, and the diaphragm pump 12 is set in suction mode, and the specimen is sucked, for example by 2 ml, from the pipette 10. At the same time,
  the driving source 26 operates to raise the pipette 10 to the state in Fig. 4.
(3) The valve 22 returns to the initial state, and the other compartment 16 of the diaphragm pump 12 communicates with the positive pressure source 18, and the diaphragm pump 12 is set in discharge mode, and 2 ml of the specimen once sucked from the pipette 10 is discharged. At the same time,
  the driving source 26 operates to lower the pipette 10 to the state in Fig. 3.
(4) Steps (2) and (3) are repeated.
(5) The uniformly agitated specimen is sucked, for example by 1 ml, by the pipette 10, and is presented for the process necessary for analysis.

By sucking and agitating the specimen while moving the pipette up and down, the liquid in the container is agitated.

After the specimen agitation and sampling steps, the cleaning step begins. The pipette 10 moves to the cleaning tank (not shown). One compartment 14 of the diaphragm pump 12 is connected with a cleaning solution tank 36 through a valve 32 and the positive pressure source 18 through a valve 34. As the valve 32 opens, the cleaning solution is supplied from the cleaning solution tank 36, and the specimen suction line including the pump 12 and pipette 10 is washed. As the valve 32 is closed and valve 34 is opened, the cleaning solution is removed by air, thus finishing the cleaning step.

Embodiment 2

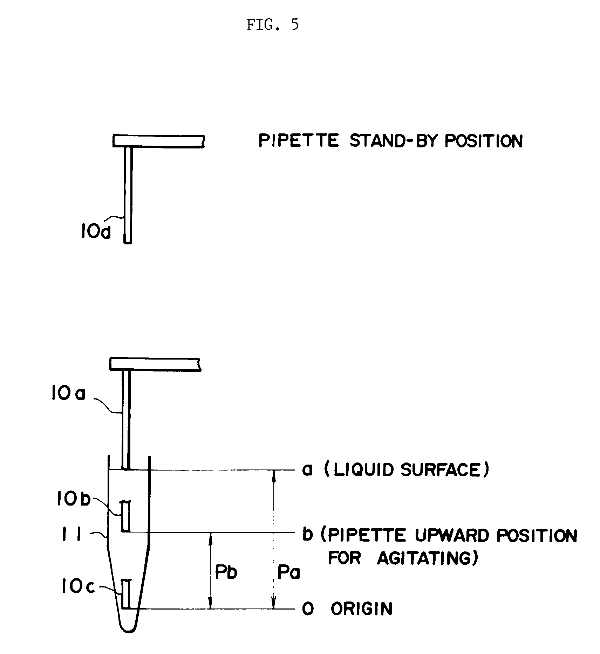

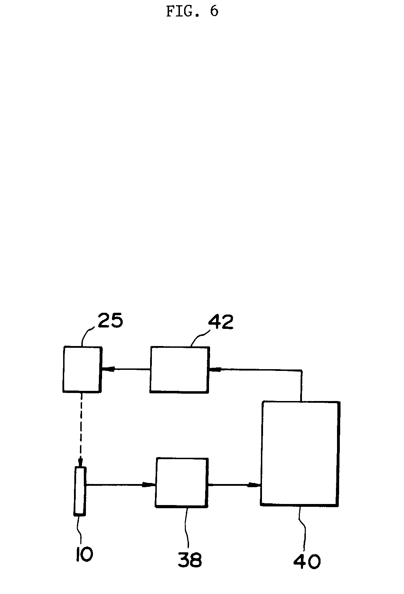

The embodiment is, as shown in Fig. 5 and Fig.6, intended to agitate more effectively by adding the liquid surface detecting function.

The control of the agitation operation by liquid surface detection is described below. In the analyzer, the volume of the specimen entering the specimen container 11 is not always constant (the height of the liquid surface is not always constant). When the sample volume is small, if the specimen is sucked, discharged and agitated while keeping constant the moving stroke of the pipette, bubbling of specimen, suction of bubbles when sampling, and splash of specimen may take place.

To solve such problems, by detecting the liquid surface, the moving distance of the pipette when agitating is determined on the basis of the detected information. Any known means may be used for detecting the liquid surface. The method of determining the moving distance of the pipette from the position information of liquid surface obtained by the liquid surface detecting means is practically described below while referring to Fig. 5.

First of all, the origin O (pipette lowering position) is determined. It is set by a limit switch. The height from the origin O to the pipette 10 corresponds to the number of pulses of the stepping motor. The number of pulses Pb corresponding to the pipette moving distance when agitating is determined as follows from the liquid level information of the liquid surface. Supposing the number of pulses of moving from detection of liquid level till origin O to be Pa, it follows that

$$Pb = K1 * Pa \text{ or } Pb = Pa - K2$$

where K1, K2 are constant, which may be desired values.

In this way by varying the moving distance of the pipette 10 depending on the difference of the specimen volume (height of liquid surface), the above problem can be solved, and the specimen may be agitated smoothly if the sample volume in the specimen container 11 is small or large. In Fig. 5, the letter b denotes the ascending position of the pipette 10 when agitating, 10a is the pipette detecting the liquid level a, 10c is the pipette located at the origin O, and 10d is the pipette in standby position.

More specifically, as shown in Fig. 6, the specimen liquid surface is detected by the liquid surface detecting means 38, and the detection signal is entered in the control circuit 40. The signal of the control circuit 40 is then fed into the driving circuit 42, and the driving means 25 is driven to move the pipette 10.

The apparatus in Embodiment 1 and Embodiment 2 is composed as described above, and has the following characteristics.

(1) The specimen is agitated by sucking and discharging while moving the pipette, and therefore even a large volume of specimen contained in a slender container can be agitated efficiently and smoothly without bubbling.
(2) The structure is simple because the same pipette is used for agitating by sucking and discharging and for sampling.
(3) If the specimen container differs in length (height) or the specimen volume varies, it is flexibly handled by varying the moving distance of the pipette.

<u>Embodiment 3</u>

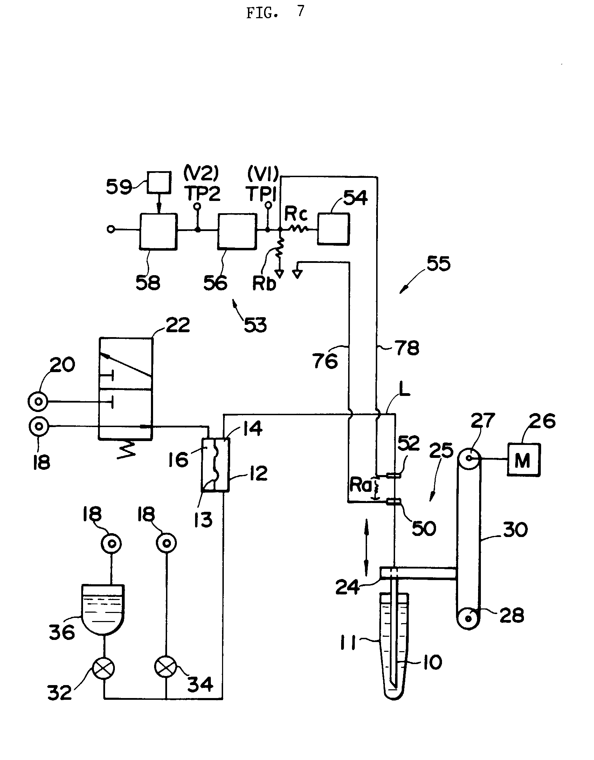

Fig. 7 is a schematic diagram showing a further different embodiment of apparatus for agitating and sampling liquid specimen by using the method of the invention. Same as in Fig. 1, numeral 10 is a pipette for sucking liquid specimen, and suction means 12 is connected to the pipette 10. As the suction means 10, for example, a diaphragm type pump (hereinafter called diaphragm pump 12) is used. One compartment 14 of the diaphragm pump 12 partitioned by a diaphragm 13 is connected to the pipette 10, and the other compartment 16 is connected to a valve 22 for changing over the positive pressure (higher than atmospheric pressure) source 18 and negative pressure (lower than atmospheric pressure) source 20.

The pipette 10 is moved up and down by driving means 25. The driving means 25 comprises, for example, an arm 24 nearly in the horizontal direction for holding the pipette 10, and endless belt 30 nearly in the vertical direction mounting the arm 24 thereon, pulleys 27, 28 disposed at the upper end and lower end of the endless belt 30, and a driving source 26, such as stepping motor, for driving the pulley 27.

The endless belt 30 is threaded between the pulleys 27, 28, and as the pulley rotates normally and reversely, the arm 24 and pipette 10 move up and down in the specimen container, for example, a urinary sediment spitbox.

Besides, as shown in Fig. 5 and Fig. 6, by adding the liquid surface detecting function, a more effective agitation may be possible.

That is, the apparatus may further comprise liquid surface detecting means 38 for detecting the liquid surface of specimen, a control circuit 40 for controlling the movement of the pipette 10 by receiving a signal from the liquid surface detecting means 38, and a driving circuit 42 for driving the driving means 25 on the basis of the signal from the control circuit 40.

In addition to the apparatus described so far, the apparatus of the embodiment also comprises a bubble detecting device 55 as shown in Fig. 7. The bubble detecting device 55 is composed of, for example, electrodes 50, 52, wiring cords 76, 78, and a detecting circuit 53.

In the midst of the specimen suction line L from the front end of the suction pipette 10 till the suction means 12, a set of corrosion-resistant conductive materials, for example, electrodes 50, 52 made of stainless steel are disposed at a specific distance in the liquid flow direction. The electrodes 50, 52 are disposed so as to contact directly with the specimen (urine, in this embodiment) flowing in the specimen suction line L. The electrodes 50, 52 are connected to a detecting circuit 53 through wiring cords 76, 78, respectively. In the detecting circuit 53, on the basis of the difference of the electric resistance Ra between the electrodes 50, 52, it is detected whether the urine specimen is present between the electrodes 50, 52 (the resistance Ra is small), or air is present (Ra is large). The urine is a conductive liquid. The conductivity varies significantly in each specimen, but it may be distinguished from air. It is also possible to discriminate if the specimen suction line L is made of an opaque material.

The detecting circuit 53 comprises an oscillator 54 for continuously issuing pulse signals, an impedance (resistance) Rc connected to the output of the oscillator 54, a wave detecting circuit 56 connected to the resistance Rc, and a comparator 58 connected to the wave detecting circuit 56, and the electrodes 50, 52 are connected to the ground and resistance Rc through wiring cords 76, 78 so as to detect the output of the oscillator 54 by dividing in resistance between the resistance Rc and resistance Ra between electrodes. Numeral 59 is a voltage source for supplying a reference (standard) voltage for the purpose of comparison. TP1 is a test point for observing the pulse signal V1 varying in wave crest value depending on the difference of the resistance Ra between electrodes, and TP2 is a test point for observing the DC voltage V2 varying in level depending on the difference of the resistance Ra between electrodes.

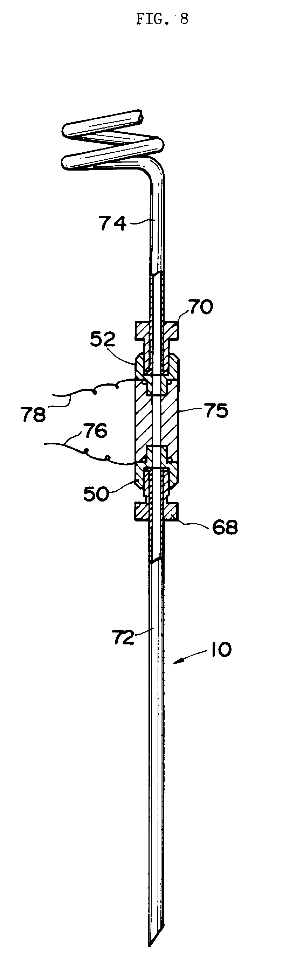

Fig. 8 is a side sectional view of the suction pipette 10. Numerals 72, 74 are, for example, fluororesin tubes (Teflon tubes) of 2 mm in inside diameter and 3 mm in outside diameter. The front end (lower end) of the tube 72 is tapered. The tube 74 is spiral so as not to disturb the movement of the pipette 10. The tubes 72, 74 are coupled by means of stainless steel electrodes 50, 52 screwed to both ends of a relay tool 75, and fixing pieces 68, 70 screwed to the electrodes 50, 52. The coupling part of the tubes 72, 74 is in flange form, and by pinching the flange with the electrodes and fixing pieces, the airtightness is maintained, and the tubes are coupled together. The relay tool 75, and the electrodes 50, 52 possess internal passages, and the electrodes 50, 52 directly contact with the specimen in the internal passages.

The distance from the front end (lower end) of the tube 72 till the electrodes 50, 52 is, for example, 110 mm and 120 mm. Therefore, the volume from the front end of the tube 72 to the electrodes 50, 52 is respectively 0.35 ml, 0,38 ml. Wiring cords 76, 78 are connected to the electrodes 50, 52.

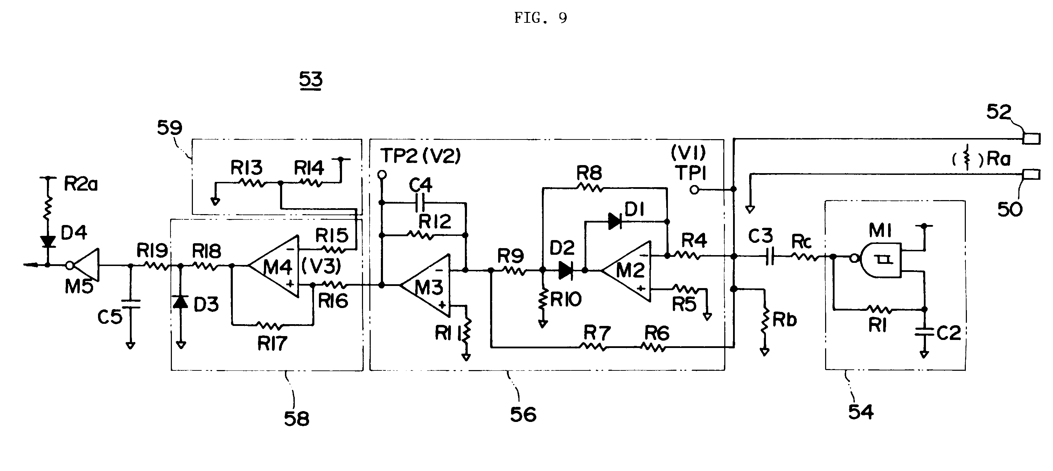

Fig. 9 is a practical circuit diagram of the detecting circuit 53. A capacitor C3 is connected in series to the resistance Rc, and resistance Tb, parallel to the resistance Ra between electrodes. This is intended to detect bubbles smoothly. The values of these elements may be adjusted to the optimum values so that the difference may be great, between when the specimen is present in the electrode part and when not present, by observing the degree of change of the pulse signal V1 appearing at the test point TP1. For example, the resistances Rc, Rb and capacitor C3 are 33 kohms, 220 kohms, and 0.047 μF, respectively. The resistance R1 and capacitor C2 are, for example, 100 kohms, 0.015 μF, respectively. M1 is a Schmitt trigger NAND gate of CMOS.

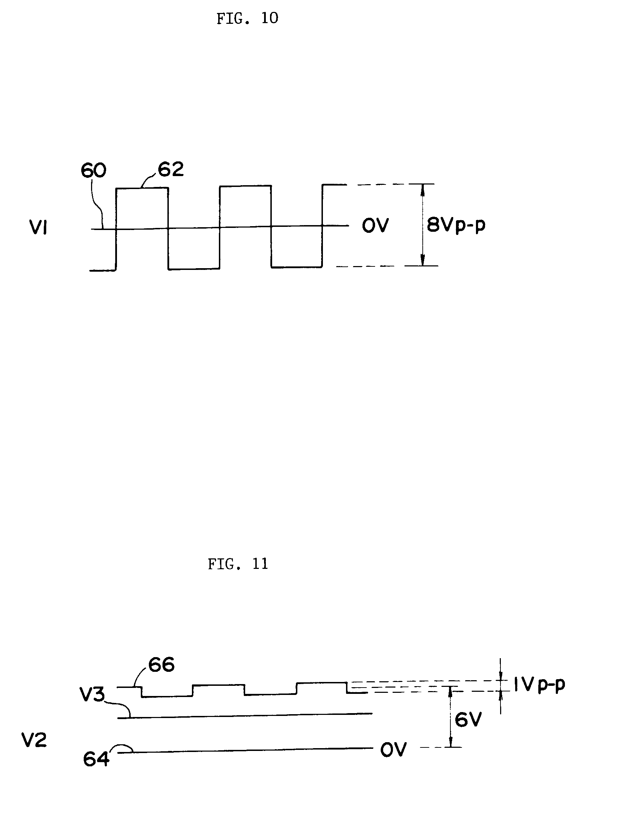

Fig. 10 and Fig. 11 denote the waveforms of signals V1, V2 appearing at test points TP1, TP2. The oscillation frequency of the pulse signal is, for example, 2.0 kHz. Numeral 60 is a signal V1 in the presence of specimen, and 62 is a signal V1 in the absence of specimen (in the case of air). Numeral 64 denotes a waveform of a signal V2 with specimen, and 66 is of a signal V2 without specimen (in the case of air). The signal V1 detected by the detecting circuit 56 is compared with a specific voltage V3 in a comparison circuit 58, and is changed into a binary value depending on the presence or absence of specimen.

This is to explain, by referring to a practical example, how the bubble detecting device 55 operates in the apparatus for agitating and sucking liquid specimen.

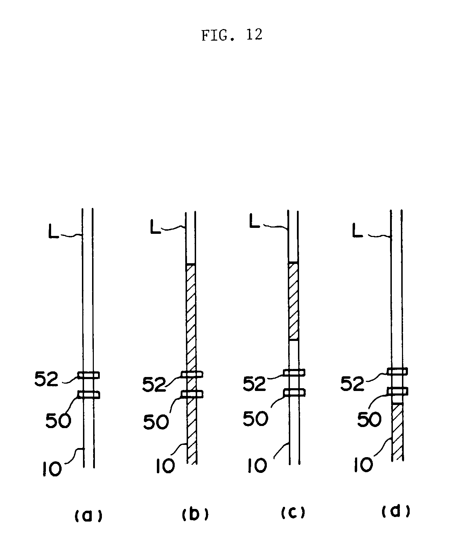

Fig.12 (a) to (d) show the motion of the specimen in the specimen suction line L. The specification of the apparatus for agitating and sucking liquid specimen may be as follows.

| Suction volume when agitating specimen | Q1 (2 ml) |
|---|---|
| Suction volume when sucking specimen (sampling volume) | Q2 (1 ml) |
| Volume from front end (lower end) of pipette 10 to lower side electrode 50 | Q3 (0.35 ml) |

Just before starting agitation, the inside of the specimen suction line L must be empty as shown in Fig. 12 (a). This state is first detected by the bubble detecting device 55. Unless empty, the liquid mixes into the specimen container when agitating the specimen.

In the process of specimen agitation, when the specimen is sucked in Q1, the state becomes as indicated by shaded area in Fig. 12 (b). At this time, it is also detected that the specimen is present between the electrodes 50, 52, and it is known that the specimen for agitation is sucked correctly. If the sample volume in the specimen container is small, once after becoming sample state, it is changed to a bubble state (short sample) as shown in Fig. 12 (c). To be in bubble state at the time of specimen agitation means that the volume of air portion is more than Q3, and the specimen volume Q that can be sucked is less than (Q1 - Q3). In other words, Q < (Q1 - Q3). For correct sampling, this specimen volume Q must be larger than the specimen suction volume Q2. It is required therefore that Q2 < Q, hence Q2 < (Q1 - Q3). If kept at Q3 < (Q1 - Q2), the condition is satisfied. Incidentally, if the specimen suction line L is clogged, the specimen does not reach up to the electrode 50 part, but the bubble state remains as shown in Fig. 12 (d).

The positions for installing the electrodes 50, 52 are not particularly limited, as far as the specimen suction may be monitored, but it is advantageous when set as specified above.

In this embodiment, the sensor for producing the difference due to the difference in the characteristics of liquid and air is composed of two electrodes, but the bubbles may be also detected, for example, by electric impedance, by ultrasonic wave or light (transmission light, reflection light).

The apparatus in Embodiment 3, being thus composed, has the following characteristics.

(1) The specimen is agitated by varying the pipette position by the driving means and sucking and discharging the specimen while moving the pipette, and therefore the sample, if a large volume is contained in a slender container, may be efficiently and smoothly agitated without bubbling.

(2) The structure is simple because the same pipette is used for agitating by sucking and discharging and for sampling. Besides, the specimen container differing in length (height) or the specimen large or small in volume may be easily handled alike only by varying the moving distance of the pipette.

(3) Aside from the driving means, the bubble detecting device is provided, and therefore when agitating specimen or sucking specimen, the presence or absence of specimen may be detected (detection of air bubbles), so that an apparatus for agitating and sucking liquid specimen of higher reliability may be realized.

## Claims

1. A method of agitating and sampling a liquid specimen, comprising sucking specimen from a specimen container (11) with a pipette (10), discharging the sucked specimen so as to agitate the specimen, and sampling the specimen with the pipette (10), wherein specimen suction and specimen discharge are carried out while changing the vertical position of the pipette (10) in the specimen container (11),
characterized in that the pipette (10) is raised relative to the specimen container (11) during specimen suction and is lowered relative to the specimen container (11) during specimen discharge.

2. A method according to claim 1, wherein the specimen liquid surface is detected and the pipette (10) is moved on the basis of the detected liquid surface, so as to keep the pipette (10) projecting below the specimen liquid surface during specimen suction and specimen discharge.

3. A method according to claim 1 or 2, wherein a sensor (50, 52) responsive to liquid and air is located in a specimen suction line (L) leading from the pipette (10), and the response of the sensor (50, 52) is processed to determine whether there is an air bubble in the specimen suction line (L).

4. A method according to claim 3, wherein the sensor (50, 52) comprises a pair of electrodes (50, 52) disposed in the specimen suction line (L), and changes in the electrical impedance (Ra) between the electrodes (50, 52) are used to determine whether there is an air bubble in the specimen suction line (L).

5. A method according to claim 4, wherein the electrode (50) closer to the pipette (10) is disposed at a position satisfying the relationship $Q3 < (Q1 - Q2)$, where the specimen suction volume when agitating the specimen is $Q1$, the specimen suction volume when sampling the specimen is $Q2$, and the volume from the open end of the pipette (10) to the closer electrode (50) is $Q3$.

## Patentansprüche

1. Verfahren zum Rühren und zur Probenentnahme eines flüssigen Probenmaterials unter Ansaugen von Probenmaterial aus einem Probenmaterialbehälter (11) mit einer Pipette (10), Abgabe des angesaugten Probenmaterials, um das Probenmaterial zu rühren, und Probenentnahme des Probenmaterials mit der Pipette (10), wobei das Probenmaterial-ansaugen und die Probenmaterialabgabe durchgeführt werden, während die vertikale Position der Pipette (10) in dem Probenmaterialbehälter (11) verändert wird, **dadurch gekennzeichnet,** daß die Pipette (10) während des Probenmaterialansaugens in bezug auf den Probenmaterialbehälter (11) angehoben und während der Probenmaterialabgabe in bezug auf den Probenmaterialbehälter (11) abgesenkt wird.

2. Verfahren nach Anspruch 1, bei dem man die Probenmaterialflüssigkeitsoberfläche ermittelt und die Pipette (10) auf der Basis der ermittelten Flüssigkeitsoberfläche so bewegt, daß die Pipette (10) während des Probenmaterialansaugens und der Probenmaterialabgabe unter die Probenmaterialflüssigkeitsoberfläche vorspringend gehalten wird.

3. Verfahren nach Anspruch 1 oder 2, bei dem ein auf Flüssigkeit und Luft ansprechender Sensor (50, 52) in einer Probenmaterialansaugleitung (L), die von der Pipette (10) aus wegführt, angeordnet wird und das Ansprechen des Sensors (50, 52) so verarbeitet wird, daß es bestimmt, ob sich eine Luftblase in der Probenmaterialansaugleitung (L) befindet.

4. Verfahren nach Anspruch 3, bei dem der Sensor (50, 52) ein in der Probenmaterialansaugleitung (L) angeordnetes Elektrodenpaar (50, 52) umfaßt, und Veränderungen der elektrischen Impedanz (Ra) zwischen den Elektroden (50, 52) verwendet werden, um zu bestimmen, ob eine Luftblase in der Probenmaterialansaugleitung (L) ist.

5. Verfahren nach Anspruch 4, bei dem die Elektrode (50) näher an der Pipette (10) in einer Position angeordnet ist, die der Beziehung Q3 < (Q1 - Q2) gehorcht, worin das Probenmaterialansaugvolumen beim Rühren des Probenmaterials Q1 ist, das Probenmaterialansaugvolumen bei der Probenentnahme des Probenmaterials Q2 ist und das Volumen von dem offenen Ende der Pipette (10) bis zu der näheren Elektrode (50) Q3 ist.

## Revendications

1. Procédé pour agiter et échantillonner un échantillon liquide, comprenant l'aspiration de l'échantillon depuis un réservoir à échantillon (11) avec une pipette (10), le déchargement de l'échantillon aspiré de manière que l'échantillon soit agité, et l'échantillonnage de l'échantillon avec la pipette (10), dans lequel l'aspiration de l'échantillon et le déchargement de l'échantillon s'effectuent alors que l'on fait varier la position verticale de la pipette (10) dans le réservoir à échantillon (11),

   caractérisé en ce que la pipette (10) est relevée par rapport au réservoir à échantillon (11) durant l'aspiration de l'échantillon, et est abaissée par rapport au réservoir à échantillon (11) durant le déchargement de l'échantillon.

2. Procédé selon la revendication 1, dans lequel la surface du liquide de l'échantillon est détectée et la pipette (10) est déplacée en fonction de la surface du liquide détectée, de manière à garder la pipette (10) dépassant sous la surface du liquide de l'échantillon durant l'aspiration de l'échantillon et le déchargement de l'échantillon.

3. Procédé selon la revendication 1 ou 2, dans lequel un détecteur (50,52) réagissant aux liquides et à l'air est situé dans une tubulure d'aspiration d'échantillon (L) en tête de la pipette (10), et dans lequel la réponse du détecteur (50,52) est traitée pour déterminer s'il y a une bulle d'air dans la tubulure d'aspiration d'échantillon (L).

4. Procédé selon la revendication 3, dans lequel le détecteur (50,52) comprend une paire d'électrodes (50,52) disposée dans la tubulure d'aspiration d'échantillon (L), et dans lequel les variations d'impédance électrique (Ra) entre les électrodes (50,52) sont utilisées pour déterminer s'il y a une bulle d'air dans la tubulure d'aspiration d'échantillon (L).

5. Procédé selon la revendication 4, dans lequel l'électrode (50) proche de la pipette (10) est placée en une position satisfaisant la relation Q3 < (Q1 - Q2), où le volume d'aspiration de l'échantillon lors de l'agitation de l'échantillon est Q1, le volume d'aspiration de l'échantillon lors de l'échantillonnage de l'échantillon est Q2, et le volume depuis l'extrémité ouverte de la pipette (10) jusqu'à l'électrode proche (50) est Q3.

FIG.1

FIG. 2

FIG. 3

FIG. 4

FIG. 5

PIPETTE STAND-BY POSITION

10d

10 a

a (LIQUID SURFACE)

10b

11

b (PIPETTE UPWARD POSITION
   FOR AGITATING)

Pb    Pa

10c

O  ORIGIN

FIG. 6

FIG. 7

FIG. 8

FIG. 9

FIG. 10

FIG. 11

FIG. 12

(a)    (b)    (c)    (d)